Europäisches Patentamt

(19) European Patent Office

Office européen des brevets

(11) Numéro de publication: **0 194 914**
**B1**

(12) **FASCICULE DE BREVET EUROPEEN**

(45) Date de publication du fascicule du brevet:
26.07.89

(21) Numéro de dépôt: **86400383.5**

(22) Date de dépôt: **24.02.86**

(51) Int. Cl.⁴: **B 64 C 31/02**

(54) Dispositif pour assister le pilotage d'une aile volante notamment en modifiant la répartition de sa voilure.

(30) Priorité: **28.02.85 FR 8502911**

(43) Date de publication de la demande:
**17.09.86 Bulletin 86/38**

(45) Mention de la délivrance du brevet:
**26.07.89 Bulletin 89/30**

(84) Etats contractants désignés:
**AT BE CH DE GB IT LI LU NL SE**

(56) Documents cités:
**FR-A- 1 446 609**
**FR-A- 2 303 710**
**FR-A- 2 512 417**
**FR-A- 2 555 128**
**US-A- 3 140 842**

(73) Titulaire: **Société d'Exploitation la Culture de l'An 2000 Roland Perinet et Cie, Route de Poitiers, F-86110 Mirebeau (FR)**

(72) Inventeur: **Perinet, Roland Jean Yvon, Route de Poitiers, F-86110 Mirebeau Vienne (FR)**

(74) Mandataire: **Lepeudry-Gautherat, Thérèse et al, ARMENGAUD JEUNE CABINET LEPEUDRY 6, rue du Faubourg Saint Honoré, F-75008 Paris (FR)**

## Description

La présente invention est relative à un dispositif pour assister le pilotage d'une aile volante notamment en modifiant la répartition de sa voilure.

Une aile volante comporte en général une structure plane souvent métallique sur laquelle est disposée une voilure et à laquelle est suspendue une cellule comprenant notamment un siège pour un pilote et un ensemble propulseur, ainsi qu'une barre de pilotage. Cette cellule est solidaire, de par sa fixation, de la structure de l'aile de telle sorte qu'il existe toujours le même angle entre ses deux éléments. De ce fait, le pilote doit lutter contre une force de rappel tendant à ramener la cellule vers sa position d'équilibre lorsque l'aile prend une incidence par rapport au sol. En d'autres termes, le pilote doit exercer une force non négligeable sur la barre de contrôle pour que l'aile ne reste pas ou ne revienne pas automatiquement en vol horizontal.

Aussi, un des buts de la présente invention est-il de procurer un dispositif procurant une assistance mécanique au pilotage d'une aile volante.

Un autre but de cette invention est de fournir un dispositif de ce type qui rend plus aisé le pilotage d'une aile volante sans en augmenter le coût et en diminuer les qualités de vol.

Ces buts ainsi que d'autres qui apparaitront par la suite, sont atteints par un dispositif pour assister le pilotage d'une aile volante notamment en modifiant la répartition de sa voilure, laquelle aile volante comprend une structure sur laquelle est disposée, de manière connue en soi, une voilure et à laquelle sont suspendues notamment une cellule par l'intermédiaire d'un mât et une barre de contrôle, ladite structure étant constituée par deux éléments rectilignes formant entre eux un angle dit angle de nez, et par une quille disposée sensiblement selon la bissectrice intérieur de cet angle, ces deux éléments rectilignes et cette quille étant articulés les uns par rapport aux autres au sommet de cet angel ou nez, des moyens pour suspendre la cellule étant montés en rotation sur cette quille et deux barres transversales étant montées chacune mobile sur un des éléments rectilignes par une de leur extrémité pour maintenir déployée ladite voilure comme décrit dans le FR-A 2 555 128.

Le dispositif selon la présente invention se caractérise en ce que les barres transversales montées par une de leurs extrémités sur un des éléments rectilignes sont montées mobiles en rotation, par leur autre extrémité sur une extrémité d'une platine, elle-même mobile en rotation autour d'un pivot vertical solidaire de la quille, laquelle platine coopère avec des moyens pour suspendre la cellule constitués de deux joues verticales qui sont disposées de part et d'autre de la quille et solidaires d'un support qui peut tourner autour de celle-ci selon son axe.

De préférence, le pivot vertical de la platine est rendu solidaire de la quille, son autre extrémité étant située entre les deux joues verticales.

Selon un mode de réalisation préféré de l'invention, les deux joues verticales sont mobiles en rotation dans leur plan.

Avantageusement, ces deux joues verticales comprennent chacune deux ouvertures situées sur une même ligne sensiblement parallèle à la quille, dont une est circulaire et coopère avec un axe de rotation solidaire du support, et dont l'autre est ovalisée selon un axe sensiblement perpendiculaire à cette ligne et coopère avec un doigt situé sur ce support.

La description qui va suivre et qui ne présente aucun caractère limitatif, doit être lue en regard des figures annexées parmi lesquelles:

La figure 1 représente en perspective une aile volante;

la figure 2 est une vue éclatée du dispositif selon la présente invention;

la figure 3 est un schéma montrant comment un tel dispositif déforme la voilure de l'aile dans un virage; et

la figure 4 est un schéma montrant comment un tel dispositif apporte une assistance au pilotage lors du tangage.

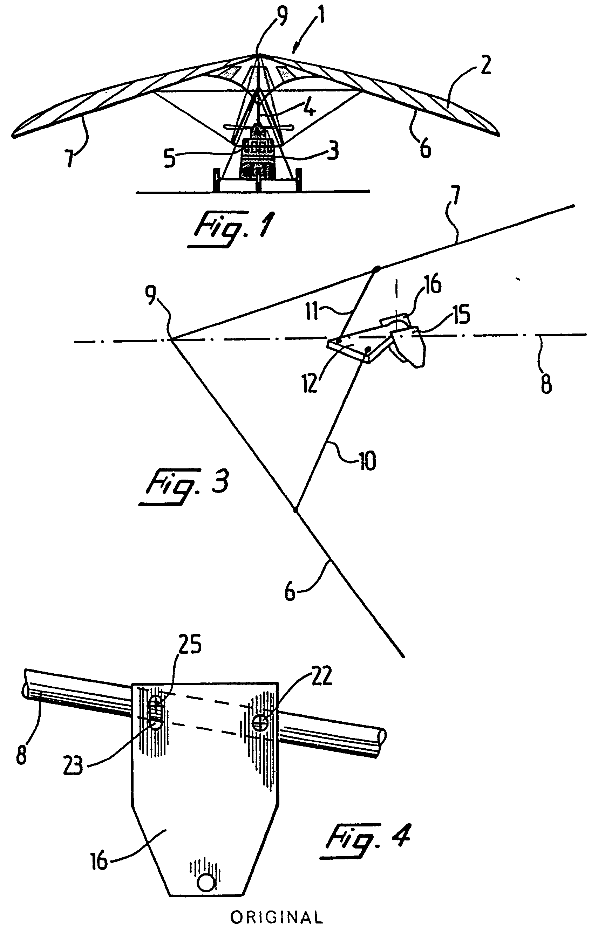

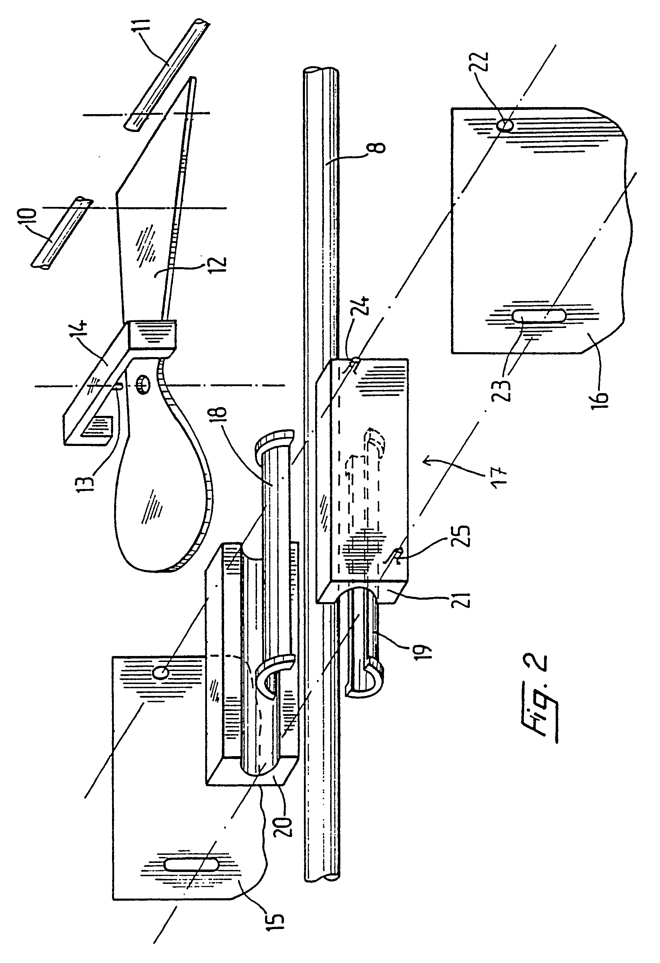

Ainsi qu'on peut le voir sur la figure 1, une aile volante comprend une structure désignée dans son ensemble par la référence 1, sur laquelle est disposée, de manière connue en soi, une voilure 2 et à laquelle sont suspendues notamment une cellule 3 pour l'intermédiaire d'un mât 4 et une barre de contrôle 5. Cette cellule 3 comprend notamment un siège pour le pilote ainsi qu'un ensemble propulseur. Le pilote dirige l'aile volante en agissant sur la barre de contrôle 5.

La structure 1 est constitué par deux éléments rectilignes 6 et 7 formant entre eux un angle dit angle de nez et par une quille 8 disposée sensiblement selon la bissectrice intérieur de cet angle: ces deux éléments 6 et 7 et cette quille 8 sont articulés les unes par rapport aux autres au sommet de cet angle ou nez 9. Elle comporte également des moyens pour maintenir déployée la voilure 2: ils sont généralement constitués par une barre reliant les deux éléments rectilignes 6 et 7.

Cette structure 1 est le plus souvent réalisée en tubes métalliques. Elle pourrait également être réalisée en tout autre matériau compatible avec l'utilisation d'une aile volante tel que par exemple les matériaux composites.

Le dispositif pour assister le pilotage d'une aile volante notamment en modifiant la répartition de sa voilure est constitué, selon la présente invention (cf. figure 2), par des moyens pour suspendre à la quille 8 la cellule 3, qui coopèrent avec des moyens pour maintenir déployée la voilure 2 et par là-même la structure 1.

Ces divers moyens sont, selon le présent exemple de réalisation, constitués par deux barres transversales 10 et 11 qui sont montées chacune mobile par une de leurs extrémités sur l'élément rectiligne correspondant 6 ou 7, et par une platine 12 à une extrémité de laquelle ces barres transversales 10 et 11 sont montées mobile en rotation par leur autre extrémité. L'autre extrémité de cette platine 12 coopère en rotation avec les moyens pour suspendre la cellule 3. Cette platine 12 est horizontale c'est-à-dire sensiblement située dans son plan parallèle à celui de la structure 1, voire le même, et mobile autour d'un pivot 13 d'axe vertical qui est situé hors de la zone de coopération avec les moyens pour suspendre la cellule 3. Le pivot vertical 13 est solidaire d'un étrier 14 solidaire de la quille 8.

Quant à ces moyens pour suspendre la cellule 3, ils comprennent, selon cet exemple de réalisation, deux joues verticales 15 et 16 qui sont disposées de part et d'autre de la quille 8 et qui peuvent tourner autour de celle-ci selon un axe se confondant avec celle-ci. La cellule 3 est suspendue à ces joues par l'intermédiaire du mât 4.

Pour ce faire, ces joues 15 et 16 sont solidaires d'un support 17 constitué par deux demi-coquilles 18 et 19 entourant la quille 8 et par deux blocs 20 et 21 entourant ces demi-coquilles et serrés sur elles par tout moyen connu, le plan de liaison des demi-coquilles et celui des blocs étant perpendiculaires. Les joues 15 et 16 sont fixées par tout moyen convenable sur les blocs 20 et 21 respectivement.

Selon un exemple de réalisation préféré de l'invention, les deux joues verticales 15 et 16 sont également mobiles en rotation dans leur plan. Chacune comporte deux ouvertures 22 et 23 situées selon une même ligne parallèle à la quille 8: une de ces ouvertures, l'ouverture 22 par exemple qui est située près du bord le plus proche du nez 9, est cylindrique et coopère avec un axe de rotation 24 solidaire du support 17; l'autre, l'ouverture 23 qui est donc située près du bord opposé, est ovalisée selon un axe vertical et coopère avec un doigt 25 portée par le support 17.

Dans ce qui suit, nous supposerons que la platine 12 est disposée au-dessus de la quille 8, par rapport à la barre de contrôle 5 sur laquelle agit le pilote situé dans la cellule 3.

Lors d'un virage à droite, le pilote emmène la barre de contrôle 5 vers la gauche et la cellule est également inclinée vers la gauche sous l'effet de la force centrifuge (figure 3). De ce fait les joues verticales 15 et 16, auxquelles est suspendue la cellule 3, sont entraînées en rotation autour de la quille 8, ce qui a pour conséquence de faire tourner la platine 12 autour du pivot 13: la barre transversale située à droite est donc tirée vers la quille 8, tandis que l'autre barre transversale est repoussée. De ce fait, la partie gauche de la voilure est tendue alors que la partie droite forme un lobe.

Lorsque les joues verticales 15 et 16 sont mobiles en rotation dans leur plan, le doigt 25 est situé sensiblement au milieu de l'ouverture ovalisée 23 lorsque l'aile est en vol horizontal. Si l'aile se cabre, le doigt 25 vient alors au contact du bord supérieur de cette ouverture ovalisée, ce qui tend à ramener l'aile vers un vol horizontal. Ainsi le pilote peut contrôler le tangage de son aile volante (figure 4).

Il pourrait également être envisagé que les joues verticales 15 et 16 soient aussi reliées aux barres transversales 10 et 11, par l'intermédiaire de biellettes. Dans ce cas la platine 12 comprend des moyens de centrage flottant lui permettant des mouvements simultanément dans le plan horizontal et dans le plan vertical. Ainsi qu'on peut aisément le comprendre, une telle réalisation implique que l'angle de nez puisse varier. De ce fait la géométrie d'une telle aile volante peut être modifiée: celle aile est donc à géométrie variable.

Comme l'homme du métier aura pu comprendre, un tel dispositif permet de maintenir le point de centrage d'une aile volante qui est pourvu, dans le foyer de celle-ci.

## Revendications

1. Dispositif pour assister le pilotage d'une aile volante, notamment en modifiant la répartition de sa voilure, laquelle aile volante comprend, une structure sur laquelle est disposée une voilure (2), et à laquelle sont suspendues une cellule (3) par l'intermédiaire d'un mât (4) et une barre de contrôle (5), ladite structure étant constituée de deux éléments rectilignes (6, 7) formant entre eux un angle dit angle de nez, et d'une quille (8) disposée sensiblement selon la bissectrice intérieure dudit angle, ces éléments et cette quille étant articulés les uns par rapport aux autres au sommet dudit angle ou nez (9), ladite cellule (3) étant montée en rotation sur la quille, la structure étant aussi constituée de deux barres tranversales (10, 11) montées chacune mobile sur un des éléments rectilignes par une de leurs extrémités, pour maintenir déployée ladite voilure, caractérisé en ce que les barres transversales (10, 11) montées par une de leurs extrémités sur un des éléments rectilignes (6, 7) sont montées mobiles en rotation, par leur autre extrémité sur une extrémité d'une platine (12), elle-même mobile en rotation autour d'un pivot vertical (13) solidaire de la quille, laquelle platine coopère avec des moyens pour suspendre la cellule (3) constitués de deux joues verticales (15, 16) disposées de part et d'autre de ladite quille (8) et solidaires d'un support (17) qui peut tourner autour de celle-ci selon son axe.

2. Dispositif selon la revendication 1, caractérisé en ce que le pivot vertical (13) de ladite platine (12) est soldaire d'un étrier rendu solidaire de la quille (8), son autre extrémité étant située entre lesdistes deux joues verticales (15, 16).

3. Dispositif selon la revendication 1, caractérisé en ce que lesdites deux joues verticales (15, 16) sont mobiles en rotation dans leur plan.

4. Dispositif selon la revendication 3, caractérisé en ce que lesdites deux joues verticales (15, 16) comprennent chacune deux ouvertures (22, 23) situées sur une même ligne sensiblement parallèle à ladite quille (8), dont une (22) est circulaire et coopère avec un axe de rotation (24) solidaire dudit support (17), l'autre (23) étant ovalisée selon un axe vertical, cette dernière coopérant avec un doigt (25) situé sur ledit support (17).

## Patentansprüche

1. Vorrichtung zur Unterstützung der Steuerung eines Nurflügelflugzeugs, insbesondere unter Verändern der Verteilung der Tragflächen, wobei das Nurflügelflugzeug eine Struktur aufweist, auf der ein Tragflügel (2) angeordnet ist und an der eine Zelle (3) mittels eines Mastes (4) und ein Steuerbalken (5) angehängt sind, wobei die Struktur aus zwei geradlinigen Elementen (6, 7), die untereinander einen Winkel, genannt Nasenwinkel, bilden, und mittels eines Kiels (8) gebildet ist, der im wesentlichen entlang der inneren Mittellinie des Winkels angeordnet ist, wobei diese Elemente und dieser Kiel untereinander an der Spitze des Nasenwinkels (9) angelenkt sind, wobei die Zelle (3) zur Drehung um den Kiel angeordnet ist, die Struktur ebenfalls aus zwei Querbalken (10, 11) gebildet ist, von denen jeder beweglich auf einem der geradlinigen Elemente mit einem ihrer Enden angeordnet ist, um den Tragflügel ausgefaltet zu halten, dadurch gekennzeichnet, daß die Querbalken (10, 11), die mit einem ihrer Enden an einem der geradlinigen Elemente (6, 7) angeordnet sind, drehbeweglich um ihr anderes Ende auf einem Ende einer Tragplatte (12) angeordnet sind, die ihrerseits drehbeweglich um einen vertikalen Drehzapfen (13) ist, der mit dem Kiel verbunden ist, wobei die Tragplatte mit Einrichtungen zum Aufhängen der Zelle (3) zusammenwirkt, die aus zwei vertikalen Seitenteilen (15, 16) gebildet sind, die einerseits und andererseits des Kiels (8) angeordnet und mit einem Tragteil (17) verbunden sind, das um sie um seine Achse drehen kann.

2. Vorrichtung nach Anspruch 1, dadurch gekennzeichnet, daß der vertikale Drehzapfen (13) der Tragplatte (12) mit einem Bügel verbunden ist, der mit dem Kiel (8) verbunden wird, wobei sein anderes Ende zwischen den beiden vertikalen Seitenteilen (15, 16) angeordnet ist.

3. Vorrichtung nach Anspruch 1, dadurch gekennzeichnet, daß die beiden vertikalen Seitenteile (15, 16) in ihrer Ebene drehbeweglich sind.

4. Vorrichtung nach Anspruch 3, dadurch gekennzeichnet, daß die beiden vertikalen Seitenteile (15, 16) jeweils zwei Öffnungen (22, 23) aufweisen, die auf einer selben Linie angeordnet sind, die im wesentlichen parallel zum Kiel (8) verläuft, wobei eine (22) kreisförmig ist und mit einer Drehachse (24) zusammenwirkt, die mit dem Tragteil (17) verbunden ist, und die andere (23) oval bzw. als Langloch entlang einer vertikalen Achse gebildet ist, wobei letztere mit einem Finger (25) zusammenwirkt, der auf dem Tragteil (17) angeordnet ist.

## Claims

1. Device to assist the control system of a flying wing, in particular by modifying its wing surface distribution, which flying wing comprises a structure on which a wing surface (2) is disposed and from which there are suspended a cell (3) by means of a mast (4) and a control bar (5), the said structure comprising two rectilinear elements (6, 7) forming between them an angle referred to as the nose angle, and a keel (8) disposed substantially along the internal bisector of the said angle, said elements and keel being articulated in relation to one another at the vertex of the said angle or nose (9), the said cell (3) being rotatably mounted on the keel, the structure also comprising two transverse bars (10, 11) each mounted so as to be movable on one of the rectilinear elements at one of their ends, to maintain the said wing surface spread out, characterized in that the transverse bars (10, 11), at one of their ends, are rotatably mounted to one of the rectilinear elements (6, 7) and, at their other end, are mounted on one end of a plate (12), which is itself rotatable about a vertical pivot (13) solid with the keel, which plate cooperates with means for suspending the cell (3) comprising two vertical cheeks (15, 16) disposed on either side of the said keel (8) and solid with a support (17) which can turn about the latter about its axis.

2. Device according to claim 1, characterized in that the vertical pivot (13) of the said plate (12) is integral with a stirrup made solid with the keel (8), its other end being situated between the said two vertical cheeks (15, 16).

3. Device according to claim 1, characterized in that the said two vertical cheeks (15, 16) are rotatably movable in their plane.

4. Device according to claim 3, characterized in that the said two vertical cheeks (15, 16) each comprise two openings (22, 23) situated on a same line substantially parallel to the said keel (8), one opening (22) being circular and cooperating with a rotation axle (24) intergral with the said support (17), the other opening (23) being out of round along a vertical axis, the latter opening cooperating with a finger (25) situated on the said support (17).

*Fig. 1*

*Fig. 3*

*Fig. 4*

ORIGINAL

Fig. 2